# EUROPEAN PATENT SPECIFICATION

(11) **EP 3 885 483 B1**
(45) Date of publication and mention of the grant of the patent: **25.06.2025**
(21) Application number: 21159211.8
(22) Date of filing: 25.02.2021
(51) Int. Cl.: D06F 34/05, D06F 34/28, A47L 15/42, A47L 9/28, A47L 15/00, F24C 3/12, F24C 7/08, H04L 12/28, H05B 6/06, H05B 6/66, H05B 6/64, D06F 75/26

(54) **COMBINATION OF A HOUSEHOLD APPLIANCE WITH USER INTERFACE AND AN EXTERNAL ELECTRONIC DEVICE**
KOMBINATION AUS EINEM HAUSHALTSGERÄT MIT BENUTZERSCHNITTSTELLE UND EINEM EXTERNEN ELEKTRONISCHEN GERÄT
COMBINAISON D'UN APPAREIL ÉLECROMÉNAGER AVEC INTERFACE UTILISATEUR ET D'UN DISPOSITIF ÉLECTRONIQUE EXTERNE

(30) Priority: 26.03.2020 IT 202000006397
(43) Date of publication of application: 29.09.2021
(73) Proprietor: Candy S.p.A., 20861 Brugherio, Monza e Brianza (IT)
(72) Inventor: SERGI, Leonardo, 20861 BRUGHERIO, MONZA E BRIANZA (IT); DE SILVA, Dario, 20861 BRUGHERIO, MONZA E BRIANZA (IT); LIGUORI, Aniello, 20861 BRUGHERIO, MONZA E BRIANZA (IT)
(74) Representative: Leihkauf, Steffen Falk

(56) References cited:
- EP-A1- 2 628 841
- WO-A1-2013/021330
- DE-A1- 102006 032 087
- DE-A1- 102009 047 466
- DE-A1- 102012 101 537
- DE-A1- 102014 214 836
- DE-A1- 102016 205 703
- DE-A1- 102017 202 334
- DE-A1- 102017 218 196
- KR-A- 20030 054 234
- US-A1- 2017 364 048
- US-A1- 2019 004 690

## Description

The present invention relates to a household appliance, in particular a washing machine, with a user interface for entering commands for controlling the operation of the household appliance.

In generic terms, the household appliances referred to in the invention comprise:
- a housing which delimits a treating seat adapted to accommodate and/or support one or more household products (clothes, dishes, food products, furnishing surfaces, fabrics) in a treating position to subject them to a desired treatment,
- one or more treatment devices arranged inside the housing and operable to carry out one or more specific treatments at the treating position,
- one or more treatment detection devices arranged inside the housing and configured to detect one or more treatment parameter values of the treatment to which the household product is subjected in the treating position,
- optionally, one or more anomaly detectors arranged inside the housing and configured to detect one or more operating anomalies of the household appliance,
- an electronic control system arranged in the housing and in signal connection with the treatment device and with the treatment detector and, if provided, with the anomaly detector, and configured to control the operation of the treatment device depending on a treatment program and depending on the values detected by the treatment detector,
- a user interface in signal connection with the electronic control system to allow the user to select (parameters of) a treatment program of the household product and, optionally, to display parameters of the treatment program selected and/or being executed.

In household appliances of the known art, the user interface is formed in one or more fixed areas of the housing or of the treating seat (refrigerator) and comprises a plurality of buttons or handles or capacitive touch sensors and, possibly, visual indicators, e.g. warning lights or a liquid crystal display (TFT) or OLED.

The user interfaces of the household appliances of the known art were satisfactory at a time in which the development of treatment strategies and parameters of the household objects (e.g. clothes or dishes), of data communication and electronic control strategies and parameters were in pace with the development of the treatment equipment, with the evolution of the design of the household appliance housings and with the average duration of the household appliances. D1 (DE102014214836A1), D2 (US 2017/364048 A1), D3 (WO2013/021330 A1), D4 (DE102009047466A1), D5 (DE102016205703A1), D6 (US2019/004690A1), D7 (DE102017218196A1), D8 (DE102017202334 A1), D9 (KR20030054234A), D10 (EP2628841A1), cited in the European Search Report for the present patent application describe prior art household appliance systems, in which D1, D2, D3, D8 are indicated by the European Search Report as closest prior art for the invention, disclosing household appliances comprising user interfaces with user inputs for selecting a treatment program and being connectable in a wireless communication manner to an external electronic device, such as a Smartphone, for selecting and setting treatment parameters of a versatile treatment program of the household appliance.

Currently, the treatment strategies of the household products, the electronic control and data communication technology, the amount of data and of treatment parameters available and potentially usable for controlling the household appliances and the aesthetical design of the household appliance housings are quickly evolving and frequently one is in conflict with the other or is "delayed" with respect to the other.

A reason for dissatisfaction with the known household appliances is the impossibility of providing sufficiently large and extensive user interfaces for displaying the increased amount of treatment control information without spatially interfering with other components of the household appliance.

A further reason for dissatisfaction with the known household appliances is the conflict between the need to have very large access openings or doors or hatches to facilitate the loading of the household products into the household appliance and the need to provide - often on the same front walls of the household appliance - free spaces for mounting the user interface, overall reduced outer sizes of the household appliances being equal.

A further need not met to date is the one of providing a minimalist household appliance, from a functional, structural and comma design viewpoint, with just as minimalist a user interface in terms of the appearance and functionality thereof.

A further need is to provide a household appliance that can be manufactured at very contained costs, is versatile in terms of the program selection and treatment parameters (e.g. of the clothes) and can be easily and quickly set and used for a treatment operation (e.g. clothes washing) conventionally used by the user.

The aforesaid needs in particular refer to a household washing machine or washer-dryer for washing clothes. Subordinately, at least some of the aforesaid needs also refer to other types of household appliances.

It is therefore the object of the present invention to provide a household appliance, in particular a washing machine or washer-dryer, having such a user interface as to obviate the drawbacks indicated with reference to the known art.

These and other objects are achieved by a combination of a household appliance, in particular a washing machine or washer-dryer, with a user interface and an external electronic device, according to claim 1. The dependent claims relate to advantageous and preferred embodiments.

According to an aspect of the invention, the user interface of the household appliance comprises an ON and OFF button, a first execution button of a preset fixed treatment program with preset and invariable treatment parameters, a second execution button of a versatile treatment program preset by the user with settable treatment parameters, a coupling (pairing) button, the activation of which carries out a wireless communication connection of the electronic control system with an electronic device that is external to the household appliance, for selecting and setting settable treatment parameters of the versatile treatment program by means of the external electronic device.

Thereby, the total number of keys or buttons of the household appliance may be minimized, the space occupied by the user interface may be considerably reduced, the production costs of the household appliance may be reduced, in particular the costs for the pushbutton panel of the user interface, the quantity of mechanical and electronical components of the user interface potentially subject to wear or breakdown may be reduced, and therefore possible maintenance and repair operations may be minimized.

In particular, the at least one preset fixed treatment program may be a treatment program prescribed by legislation or a treatment program used very frequently based on statistics on the use of the specific type of household appliance.

Further advantageous aspects of the invention will become apparent from the following description of some embodiments thereof, given by way of non-limiting example, with reference to the accompanying Figures, in which:

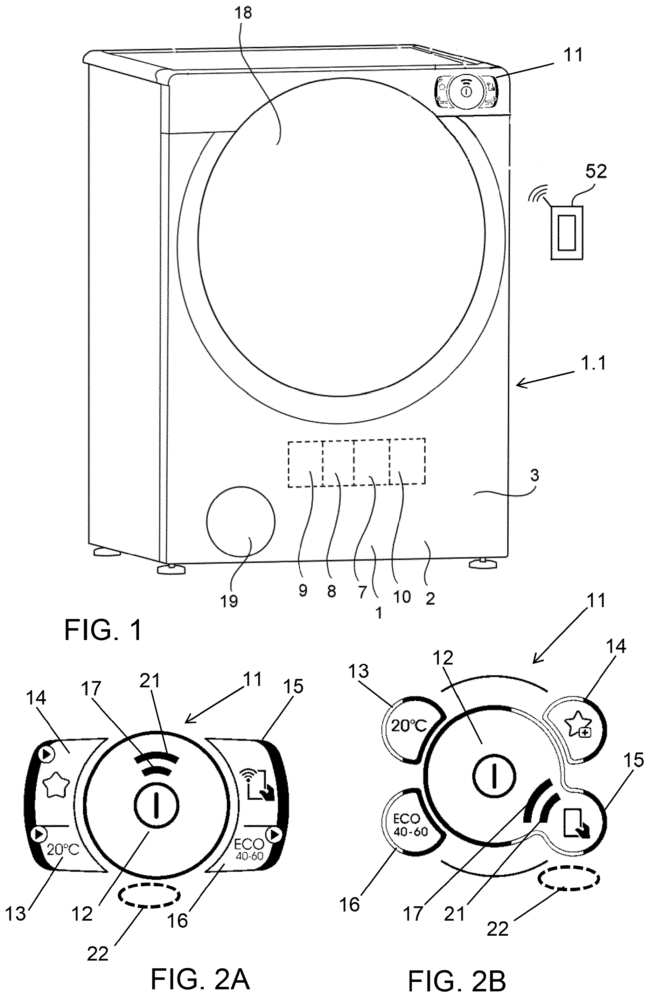

- Figure 1 is a front view of a washing machine according to an embodiment of the invention,
- Figure 2A shows a user interface of a household appliance, in particular of the washing machine in Figure 1, according to an embodiment,
- Figure 2B shows a user interface according to a further embodiment,

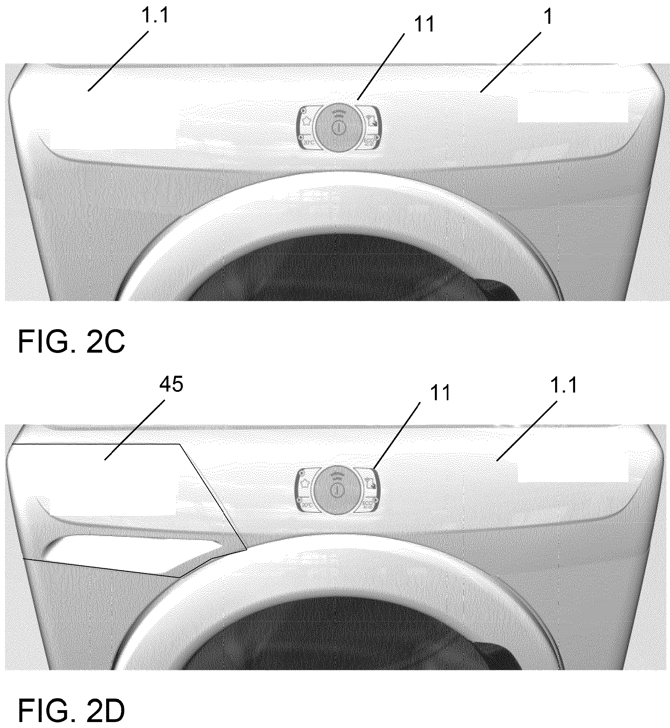

- Figure 2C is a front view of a detail of a washing machine according to a further embodiment,
- Figure 2D is a front view of a detail of a washing machine according to a further embodiment,
- Figure 3 is a diagrammatic view of a washing machine according to an embodiment,
- Figure 4 is a diagrammatic view of a dryer according to an embodiment,
- Figure 5 is a diagrammatic view of a washer-dryer according to an embodiment,
- Figure 6 is a diagrammatic view of a dishwasher according to an embodiment,
- Figure 7 is a diagrammatic view of a household oven according to an embodiment,
- Figure 8 is a diagrammatic view of the functional groups of a household microwave oven according to an embodiment,
- Figure 9 is a diagrammatic view of the functional groups of an electric or induction cooktop according to an embodiment,
- Figure 10 is a diagrammatic view of the functional groups of a gas cooktop according to an embodiment,
- Figure 11 is a diagrammatic view of the functional groups of a refrigerator according to an embodiment,
- Figure 12 is a diagrammatic view of the functional groups of a freezer according to an embodiment,
- Figure 13 is a diagrammatic view of the functional groups of a vacuum cleaner according to an embodiment,
- Figure 14 is a diagrammatic view of the functional groups of an ironing system according to an embodiment.

With reference to the drawings, a household appliance 1 comprises:
- a housing 2 with an outer wall 3 forming an outer surface 4 of the household appliance 1,
- a treating seat 5 adapted to accommodate and/or support household products in a treating position 6,
- at least one treatment device 7 arranged inside housing 2 and operable to carry out a treatment at the treating position 6 and to subject the household product to said treatment,
- at least one treatment detector 8 at least partially arranged inside housing 2 and configured to detect a value of a treatment parameter of the treatment carried out by the treatment device 7,
- optionally, at least one anomaly detector 9 at least partially arranged inside housing 2 and configured to detect a quantity indicating an operating anomaly of the household appliance 1,
- an electronic control system 10 arranged in housing 2 and in signal connection with the treatment device 7 and with the treatment detector 8 and configured to control the treatment device 7 depending on a treatment program and depending on the value detected by the treatment detector 8,
- a user interface 11 in signal connection with the electronic control system 10.

According to the invention, the user interface 11 comprises:
- an ON and OFF button 12, the activation and deactivation of which turns the household appliance 1 ON and OFF, respectively,
- a first execution button 13, the activation of which starts a fixed treatment program which is preset with preset and invariable treatment parameters,
- a second execution button 14, the activation of which starts a versatile treatment program which is preset with treatment parameters which can be set by the user,
- a coupling (pairing) button 15, the activation of which carries out a wireless communication connection of the electronic control system 10 with an external electronic device 52, which is separate from the household appliance 1, for example a smartphone or a tablet computer, for selecting and setting settable treatment parameters of the versatile treatment program by means of the external electronic device 52.

In this way, the total number of keys or buttons of the household appliance 1 may be reduced, the space occupied by the user interface 11 may be considerably reduced, the production costs of the household appliance 1 may be reduced, in particular the costs for the pushbutton panel of the user interface 11, the quantity of mechanical and electronical components of the user interface 11 potentially subject to wear or breakdown may be reduced, and therefore possible maintenance and repair operations may be minimized.

In particular, the at least one preset fixed treatment program may be a treatment program prescribed by legislation or a treatment program used very frequently, based on statistics on the use of the specific type of household appliance 1.

More than one preset fixed treatment program, for example two fixed programs prescribed by legislation on the subject of household appliances, may be provided for certain household appliances. Here, the user interface 11 may comprise a third execution button 16 of a further fixed treatment program which is preset with preset and invariable treatment parameters.

According to an embodiment, the external electronic device 52 comprises a computer program which is adapted to a remote control of the household appliance 1 using the wireless communication connection between the electronic control system 10 of the household appliance 1 and the external electronic device 52, which is activated by operating the coupling button 15.

By means of the computer program of the external electronic device 52, the following is possible:
- the settable treatment parameters of the versatile treatment program may be selected, in which the treatment program thus set becomes a default, or "preferred", treatment program which can be executed whenever the second execution button 14 is operated, and/or
- the parameters of a treatment program which can be executed by the household appliance 1 and the start thereof may be selected and set directly by means of the external electronic device 52 without involving the execution buttons 13, 14, 16 of the user interface 11.

For this purpose, the electronic control system 11 receives, from the external electronic device 52, a signal which encodes the treatment parameters selected by the user, stores the selected treatment parameters in an internal memory thereof and, in response to operating the second execution button 14, executes the versatile treatment program with the selected and stored treatment parameters.

In the absence of programming of the versatile treatment program by means of the external electronic device 52, the versatile treatment program uses preset factory treatment parameters.

Even if the electronic control system 10 does not find the selected treatment parameters stored in the internal memory thereof, instead of signaling an error, the electronic control system 10 restores the preset factory treatment parameters for the versatile treatment program.

According to an embodiment, the electronic control system 10 is configured to communicate to the external electronic device 52 the versatile treatment program with the treatment parameters currently stored in the internal memory thereof.

This allows the computer program of the external electronic device 52 to display the treatment parameters currently set for the versatile treatment program so as to facilitate and speed up possible small modifications to the versatile treatment program.

According to the preferred embodiment, the user interface 11 itself does not allow any selecting and setting of the settable treatment parameters of the versatile treatment program.

This allows a use of the household appliance 1 in expert mode, by selecting, programming and setting treatment parameters by means of the external electronic device 52 as well as a highly simplified use of the household appliance 1 by means of the execution buttons 13, 14, 16 alone and without any involvement of the external electronic device 52 and dedicated computer program.

According to a further embodiment, in the absence of new programming by means of the external electronic device 52, the versatile treatment program which can be activated by means of the second execution button 14 is automatically identical to the last treatment program executed by the household appliance 1.

Thereby, an individual who is to repeatedly execute a same treatment program on an increased number of household objects, for example a same washing program on an increased quantity of clothes of the same type, may start the treatment program (e.g. washing) several times by operating the second execution button 14 without any need to select or set individual treatment parameters (e.g. washing parameters).

According to a still further embodiment, in the absence of new programming by means of the external electronic device 52, the versatile treatment program which can be activated by means of the second execution button 14 is automatically identical to the last treatment program executed by means of the operation of the second execution button 14.

This advantageously allows the fixed treatment program or the further fixed treatment program to be executed without influencing the settable treatment parameters of the versatile treatment program.

Advantageously, the user interface 11 comprises less than six buttons. Moreover, it is preferable for the user interface not to comprise any individual member for selecting a plurality of treatment programs or treatment parameters. This considerably simplifies the use of the user interface 11, obviates the need to install multiple selection members, e.g. selection knobs, increases the life of the user interface 11 and reduces the manufacturing costs and the need for maintenance.

According to embodiments, the ON and OFF button 12 is a mechanical pressure button (pushbutton), for example a button which may take on a pressed position (in activated configuration), and a protruding position (in deactivated configuration), while the first 13, second 14, third 16 program execution buttons and the coupling button 15 may be configured as touch keys, e.g. capacitive touch keys. This obviates the risk of turning the household appliance 1 ON and OFF by only touching the ON button 12, allows the program execution buttons 13, 14, 16 and the coupling button 15 to be moved close to each other and to the mechanical ON and OFF button 12 in order to globally reduce the space occupied by the user interface 11.

According to an advantageous embodiment, all the (five) buttons 12, 13, 14, 15, 16 of the user interface 11 are configured as touch buttons, e.g. as capacitive buttons, the outer surface of which (which is pressed by the user) may be pressed against the elastic resistance of an elastic element arranged at each of the buttons 12, 13, 14, 15, 16.

This reconciles the advantages of the touch technology with the need for the tactile perception of having triggered a treatment process.

According to a preferred embodiment, the user interface 11 has no alphanumeric display within the view of a rigorous simplification of the start process of the treatment program.

Advantageously, the user interface 11 may comprise two warning lights (preferably LEDs) having different colors, for example a first warning light 17 having a first color (e.g. green) and a second warning light 21 having a second color (e.g. blue), which is different from the first color. Both warning lights 17, 21 are disabled when the household appliance 1 is OFF or in standby. The second warning light 21 (e.g. blue) is ON when the household appliance 1 is ON and pending activation of one of the first 13, second 14, third 16 (when provided) execution buttons or the coupling button 15. The first warning light 17 (e.g. green) is ON after the activation of one of the first 13, second 14, third 16 (when provided) execution buttons and during the execution of one of the respective fixed or versatile treatment programs.

According to a preferred embodiment, the first warning light 17 and the second warning light 21 are obtained in a single optical warning area which lights up with the first color and with the second color, for example by means of a single multicolor LED. The user interface 11 may further comprise an audible warning device 22 which emits an acoustic signal:
- to confirm the operation of at least one of the execution buttons (13, 14, 16) or of the coupling button (15), and/or
- to confirm the completion of execution of the treatment program, and/or
- when one of the execution buttons (13, 14, 16) is pressed while an access door to the treating seat (5) is still open.

According to embodiments:
**(condition 1)** when the household appliance 1 is OFF or in standby, i.e. when none of the buttons for the user interface 11 is operated, the warning lights 17, 21 and the audible warning device 22 are disabled. Here, an access door 18 to the treating seat 5 is not locked and therefore may be opened.
**(condition 2a)** when the ON button 12 is operated and the wireless connection is disconnected,
   - the second warning light 21 is activated in a first warning light mode, e.g. constant light,
   - the audible warning device 22 may emit an ON acoustic signal which signals the switch from condition 1 to condition 2a,
   - the audible warning device 22 may emit a cycle end acoustic signal signaling the completion of a treatment program,
   - the audible warning device 22 may emit a door open acoustic signal signaling an access door 18 to the treating seat 5 is not closed,
   - the audible warning device 22 may emit a remote controller disabled acoustic signal in response to a disconnection of the wireless connection by means of the operation of the coupling button 15,
**(condition 2b)** when the ON button 12 is operated and the wireless connection is connected by means of the operation of the coupling button 15,
   - the first warning light 17 is activated in a first warning light mode, e.g. constant light,
   - the audible warning device 22 may emit a remote controller activated acoustic signal in response to the connection of the wireless connection by means of the operation of the coupling button 15,
   - the audible warning device 22 may emit a cycle end acoustic signal signaling the completion of a treatment program,
   - the audible warning device 22 may emit a door open acoustic signal signaling an access door 18 to the treating seat 5 is not closed,
**(condition 3a)** when the ON button 12 is operated, wireless connection is disconnected and one of the execution buttons 13, 14, 16 is operated,
   - the second warning light 21 is activated in a second warning light mode, e.g. pulsed light,
   - the audible warning device 22 may emit a cycle start acoustic signal signaling the start of a treatment program, for example an execution triggered by the operation of one of the execution buttons 13, 14, 16, starting, for example from condition 2a,
   - the audible warning device 22 may emit a remote controller disabled acoustic signal in response to a disconnection of the wireless connection by means of the operation of the coupling button 15,
**(condition 3b)** when the ON button 12 is operated, wireless connection is connected and one of the execution buttons 13, 14, 16 is operated,
   - the first warning light 17 is activated in a second warning light mode, e.g. pulsed light,
   - the audible warning device 22 may emit a cycle start acoustic signal signaling the start of a treatment program, for example an execution triggered by the operation of one of the execution buttons 13, 14, 16, starting, for example from condition 2b,
   - the audible warning device 22 may emit a remote controller activation acoustic signal in response to a connection of the wireless connection by means of the operation of the coupling button 15, starting, for example, from condition 3,
**(condition 4)** a Wi-Fi or Bluetooth enrolment process of the electronic control system 10 of the household appliance 1 in the control system carried out by means of the external electronic device 52 may be carried out by means of the combined operation of a plurality of the coupling 15 and execution 13, 14, 16 buttons. The execution of the enrolment may be signaled to the user by the activation of the second warning light 21 in blinking mode.

According to an embodiment, the settable program parameters of the versatile wash program may be selected and input only by means of the external electronic device 52 and not also by means of the user interface 11 of the household appliance 1. This further contributes to a simplification and minimalist perception of the use of the household appliance 1.

According to the invention, the electronic control system 10 of the household appliance 1 is connectable to the external electronic device 52 by means of a wireless communication connection or network, for example by means of Wi-Fi or Bluetooth.

According to an embodiment, the user interface 11 is connected to a motherboard of the electronic control system 10 by means of an I2C (I12C bus) communication protocol. The electronic control system 10 may comprise an integrated micro-controller (system on a chip) with integrated Wi-Fi and Bluetooth module for the wireless connection to the external electronic device 52.

### Detailed description of embodiments of the treatment devices 7

According to embodiments, the treatment devices 7 of the household appliance 1 may comprise one or more of:
- a hydraulic system 27 for filling and emptying and/or circulating water to wet the household products in the treating position,
- a ventilation and/or air circulating system 28 for aerating the household products in the treating position,
- a heating system 29 for heating the household products and/or for heating the water of the hydraulic system and/or for heating the air of the ventilation system,
- a dehumidifying system 30 for drying the household products and/or for dehumidifying (for example through condensation) the air of the ventilation system 28,
- a dispensing system 31 for dispensing one or more chemical treatment substances directly on the household product and/or in the water of the hydraulic system 27 and/or in the air of the ventilation system 28,
- a mechanical moving or agitation system 29a for moving the household product and/or the treating seat 5, for example for the purpose of rehydrating by means of centrifuge effect or of variation of exposure of the household product to the treatment device 7 or of agitating and remixing the household product,
- a microwave generator 30a for generating microwaves in the treating position 6,
- a steam generator 31a for generating steam in the treating position 6,
- a generator (e.g. an induction coil) 32 of a varying electromagnetic field adapted to generate an induced electromotive force (and therefore an induction heating) in electrically conductive pots in the treating position 6,
- a gas burner 33 adapted to heat pots or food in the treating position 6,
- a cooling and/or freezing system 34 adapted to cool and/or freeze the household products in the treating position 6.

### Detailed description of embodiments of the treatment detectors 8

According to embodiments, the treatment detectors 8 may comprise one or more of:
- a water pressure sensor 35,
- a water level sensor 36,
- a water temperature sensor 37,
- an air temperature sensor 38,
- a treating seat temperature sensor 39,
- a water torpidity sensor 40,
- an electrical quantity sensor 41 of an electric motor of the mechanical handling and/or agitation system 29,
- a presence sensor 42 of household products in the treating position 6,
- a level or presence sensor 43 of a chemical treatment substance in the dispensing system 31 of treatment substances,
- a positioning sensor 44 of movable parts of the household appliance 1 (e.g. door 18, auxiliary door 19, detergent drawer 45, filter 46, filter holder 47, dust bag 48),
- a flame presence sensor 49,
- a camera 50 connected to or in housing 2 and directed towards the treating position 6 to monitor the household product during the treatment.

### Detailed description of embodiments of the anomaly detectors 9

According to embodiments, the anomaly detectors 9 are also in signal connection with the electronic control system 10 and may comprise one or more of a temperature sensor, a water presence sensor, a smoke presence sensor, a no water sensor, a position/presence sensor of movable or detachable parts of the household appliance (e.g. door 18, auxiliary door 19, detergent drawer 45, filter 46, filter holder 47, dust bag 48).

According to embodiments, the electronic control system 10 controls the one or more treatment devices 7 also depending on anomaly signals generated by the anomaly detectors 9.

### Detailed description of embodiments of the household appliance 1

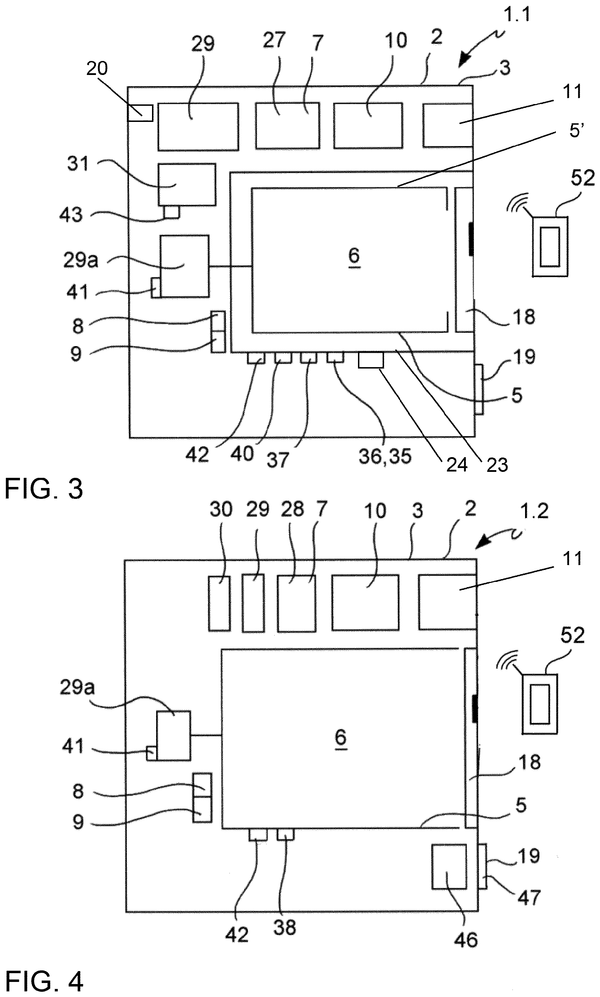

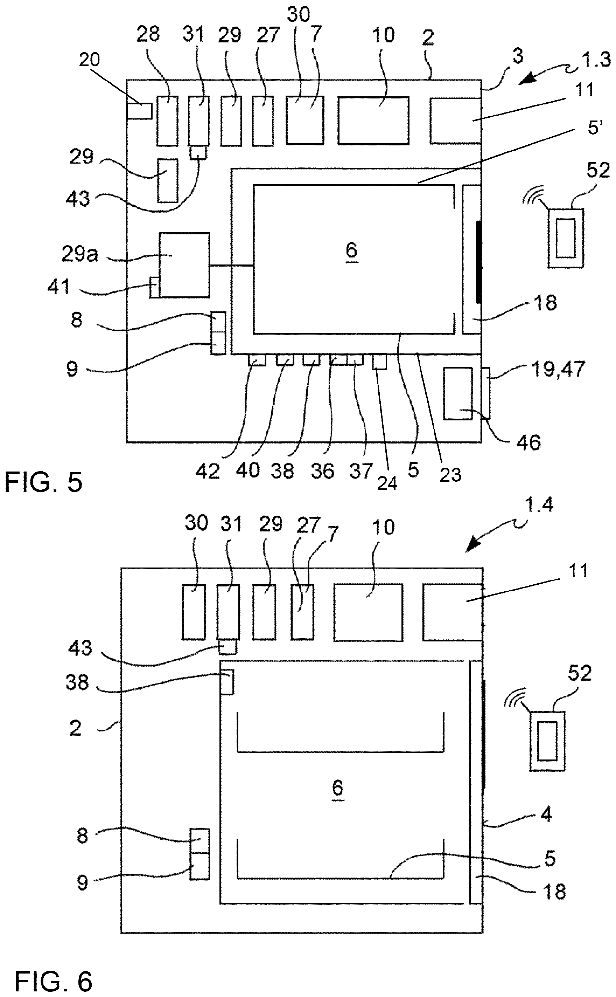

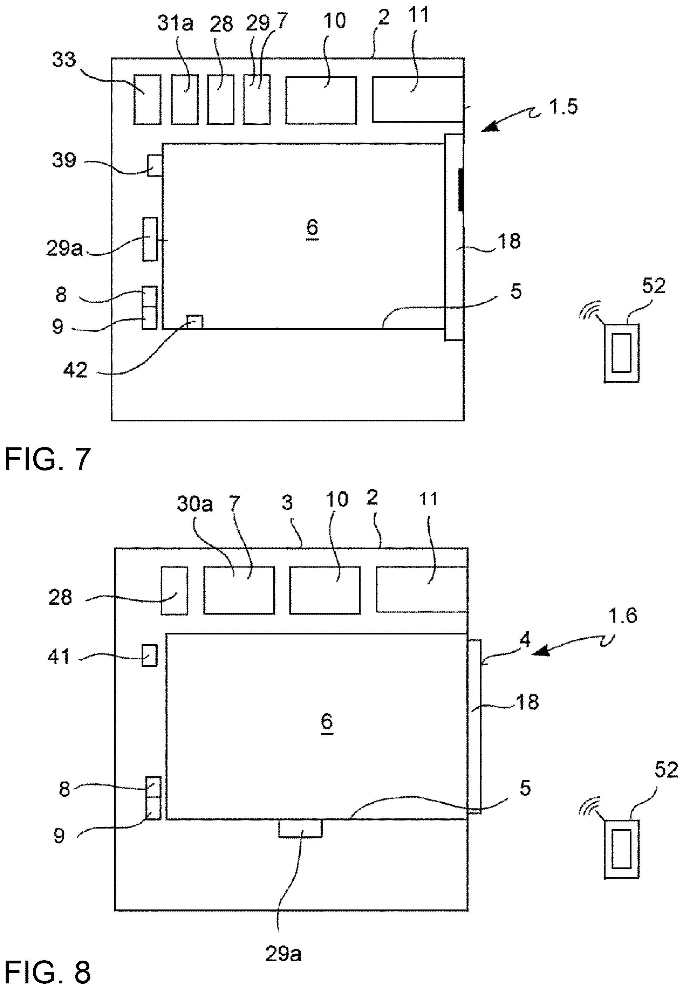

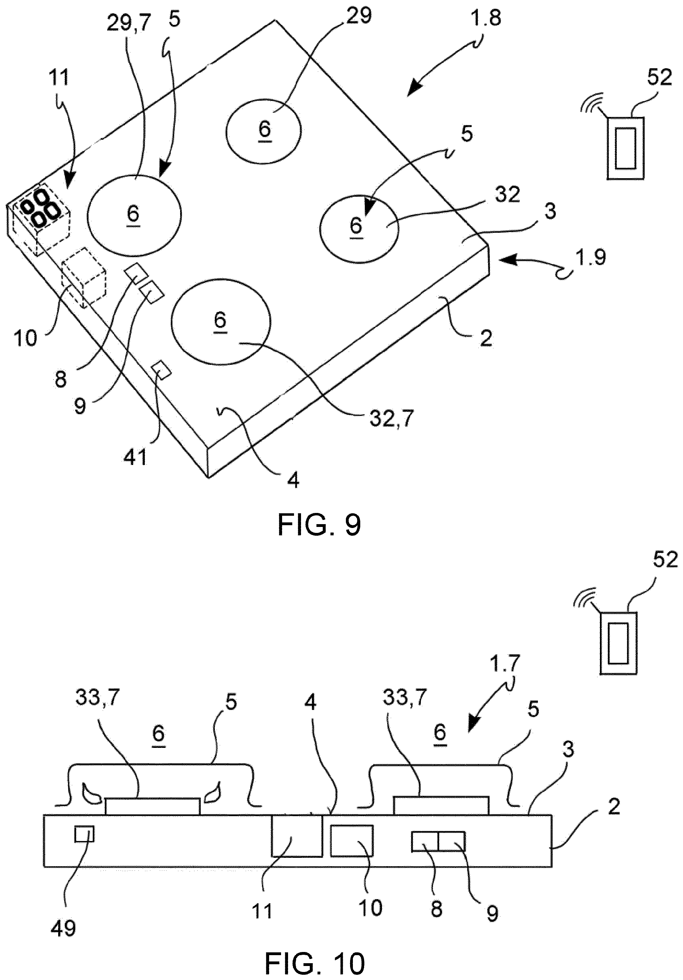

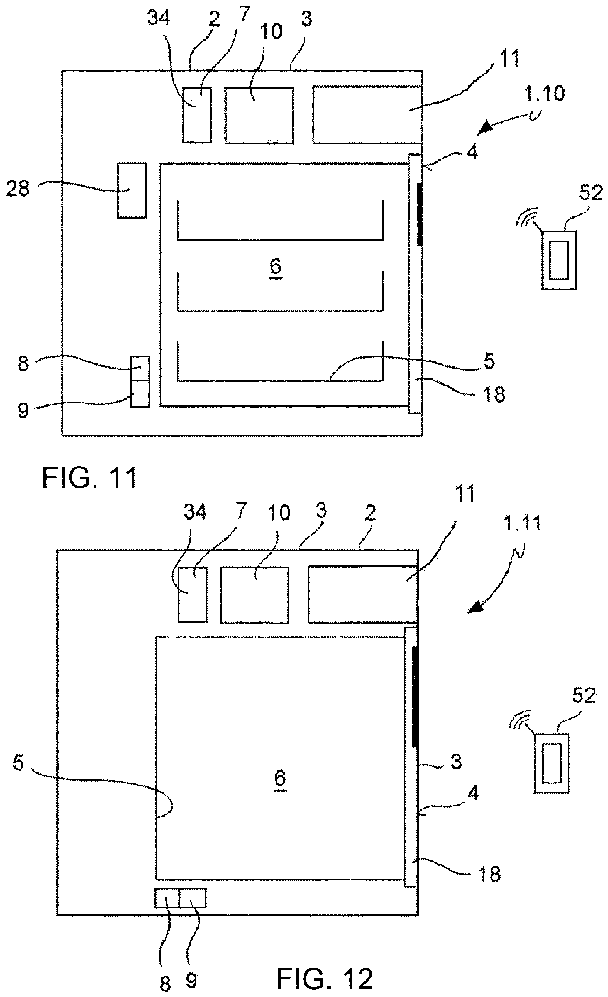

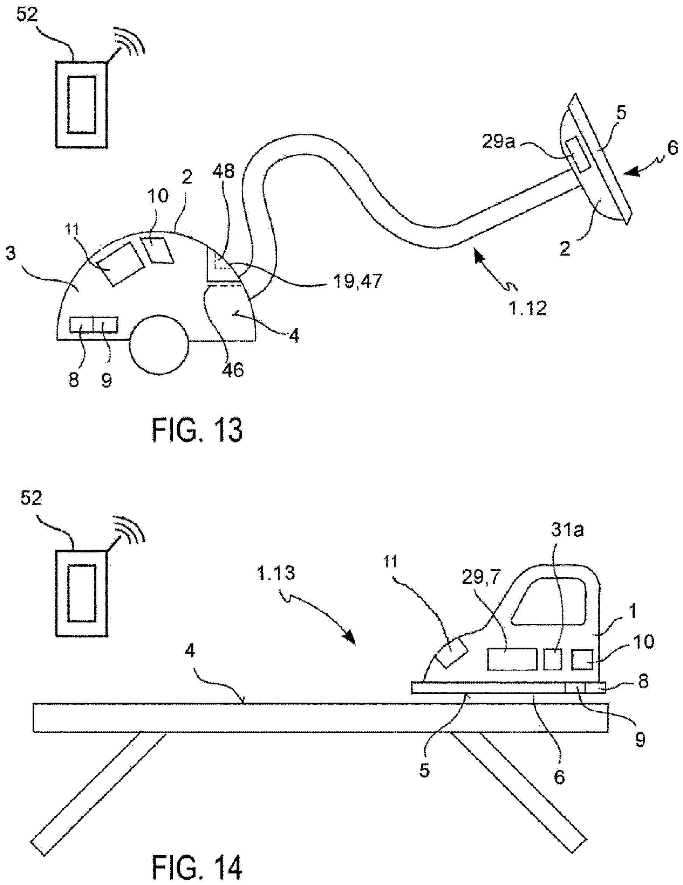

The household appliance 1 for example, is one of:
- a washing machine 1.1 **(****Figure 3****),**
- a dryer 1.2 **(****Figure 4****),**
- a washer-dryer 1.3 **(****Figure 5****),**
- a dishwasher 1.4 **(****Figure 6****),**
- a household oven 1.5 **(****Figure 7****),**
- a microwave oven 1.6 **(****Figure 8****),**
- a gas cooktop 1.7 **(****Figure 10****)** and/or resistive cooktop 1.8 **(****Figure 9****)** and/or induction cooktop 1.9 **(****Figure 9****),**
- a refrigerator 1.10 **(****Figure 11****),**
- a freezer 1.10 **(****Figure 12****),**
- a vacuum cleaner 1.11 **(****Figure 13****),**
- an ironing apparatus 1.12 **(****Figure 14****).**

According to embodiments, the household products which are treated by means of the household appliance 1 may comprise one or more of:
- clothes to be washed and/or dried and/or ironed,
- dishes to be washed,
- food products to be reheated and/or cooked and/or defrosted and/or frozen and/or cooled,
- furnishing surfaces to be dusted and/or cleaned,
- fabrics to be ironed or sewn.

### Detailed description of the washing machine 1.1

The washing machine 1.1 **(****Figure 3****)** comprises a laundry drum 5' forming the treating seat 5 and which can be closed by a door 18, as well as a hydraulic system 27, a water heating system 29, a dispensing system 31, a moving system 29a.

The user interface 11 of the washing machine 1.1 comprises:
- the ON and OFF button 12, the activation and deactivation of which turns the washing machine 1.1 ON and OFF, respectively,
- the first execution button 13, the activation of which starts a fixed wash program which is preset with preset and invariable washing parameters,
- the second execution button 14, the activation of which starts a versatile wash program which is preset with washing parameters which are settable by the user,
- the coupling (pairing) button 15, the activation of which carries out the aforesaid wireless communication connection of the electronic control system 10 of the washing machine 1.1 with the external electronic device 52, for selecting and setting settable washing parameters of the versatile wash program by means of the external electronic device 52.

According to an embodiment, the washing machine 1.1 or washer-dryer comprises a support and housing structure 2, inside which a washing tub 23 is housed, provided with a front opening which can be closed by means of a porthole door 18 hinged on the front of housing 2. A drum 5' (which forms the treating seat 5) is rotatably accommodated about a horizontal or inclined axis inside the washing tub 23 to receive the clothes to be washed. Also the drum 5' delimits a front opening placed at the opening of the washing tub 23 in order to load and unload the clothes.

The washing tub 23 is adapted to contain the washing liquid during the clothes washing steps.

A hydraulic system 27 connectable to the water supply network is provided to allow the loading of tub 23 with mains water. The hydraulic system 27 may comprise a plurality of ducts extending, for example from one or more, e.g. two, supply solenoid valves 20, directly or through detergent compartments of a detergent tray 45 (optional), up to the washing tub 3.

On the bottom of the washing tub 23 is connected a drainage duct with associated drain pump 24 which removes the washing liquid from the washing tub 23 and which, together with the supply solenoid valves 20, controls the level of liquid in the washing tub 23.

A heating system 29 may be provided to heat the washing liquid contained in tub 3, for example an electrical resistance, arranged inside the washing tub 23, in particular on the bottom of the washing tub 23, in the gap between the wall of the washing tub 23 and the laundry drum 5',
The laundry drum 5' may be activated in rotation by means of handling system 29 A, for example an electric motor and a drive, for example, to shake and mix the clothes with the washing liquid.

The operation of the washing machine 1.1 is controlled by the electronic control system 10 which is operatively connected to the user interface 11. In response to the selections made by the user by means of the user interface 11 and/or by means of the external electronic device 52, the electronic control system 10 controls the various components of the washing machine 1.1 to automatically wash the clothes.

The washing machine 1.1 may further comprise a dispensing system 31 of the "multiple dose" type for dispensing clothes treatment substances.

According to an embodiment, the washing machine 1.1 has no dedicated detergent container so that a detergent and/or other additives or treatment substances are to be placed by the user directly in the treating seat 5, i.e. in the laundry drum 5', together with the clothes themselves. In this case, the hydraulic system 27 may comprise a single solenoid valve 20 for the connection to the water supply network, as well as a duct extending from the single solenoid valve 20 directly into the washing tub 23.

This allows obviating the installation of a second solenoid valve which directs a water flow into the detergent container.

This configuration further simplifies the mechanical and hydraulic structure of the washing machine 1.1 and further reduces the manufacturing costs.

Detailed description of further types of household appliances

The dryer 1.2 **(****Figure 4****)** comprises a basket or laundry drum forming the treating seat 5 and which can be closed by a door 18, as well as a ventilation system 28, an air heating system 29, a dehumidifying system 30, a moving system 29a.

The washer-dryer 1.3 **(****Figure 5****)** comprises a laundry drum forming the treating seat 5 and which can be closed by a door 18, as well as a hydraulic system 27, a water heating system 29, a dispensing system 31, a moving system 29a, a ventilation system 28, an air heating system 29, a dehumidifying system 30.

The dishwasher 1.4 **(****Figure 6****)** comprises a receiving cavity forming the treating seat 5 and which can be closed by a door 18, as well as a hydraulic system 27, a water heating system 29, a dispensing system 31, and optionally, a dehumidifying system 30.

The household oven 1.5 **(****Figure 7****)** comprises a cooking cavity forming the treating seat 5 and which can be closed by a door 18, as well as a ventilation system 28, a heating system 29 for heating the food products, optionally a moving system 29 A (e.g. for turning meat to be roasted), optionally a steam generator 31a for generating steam in the treating position 6, optionally a gas burner 33 adapted to heat food in the treating position 6.

The microwave oven 1.6 **(****Figure 8****)** comprises a cooking cavity forming the treating seat 5 and which can be closed by a door 18, as well as a microwave generator 30a for generating microwaves in the treating position 6, a moving system 29a, optionally a ventilation system 28.

The resistive cooktop 1.8 **(****Figure 9****)** comprises a pot support structure forming the treating seat 5, as well as a resistive heating system 29 for heating pots or food in the treating position 6.

The induction cooktop 1.9 (**Figure 9**) comprises a pot support structure forming the treating seat 5, as well as a generator (e.g. an induction coil) 32 of a varying electromagnetic field in the treating position 6.

The gas cooktop 1.7 (**Figure 10**) comprises a pot support structure forming the treating seat 5, as well as a gas burner 33 adapted to heat pots or food in the treating position 6.

The refrigerator 1.10 (**Figure 11**) comprises a cooling cavity forming the treating seat 5 and which can be closed by a door 18, as well as a cooling and/or freezing system 34 adapted to cool and/or freeze the household products in the treating position 6 and optionally, a ventilation and/or air circulating system 28 for aerating the household products in the treating position 6.

The freezer 1.11 (**Figure 12**) comprises a freezing cavity forming the treating seat 5 and which can be closed by a door 18, as well as a freezing system 34 adapted to freeze the household products in the treating position 6.

The vacuum cleaner 1.12 (**Figure 13**) comprises a suction mouth for a furnishing surface forming the treating seat 5, as well as a ventilation system 28, in particular a suction system, of air from the furnishing surface in the treating position 6, and optionally, a mechanical moving 29a or agitation system for moving the treating seat 5.

The ironing system 1.13 (**Figure 14**) comprises a heatable plate forming the treating seat 5, as well as a heating system 29 for heating the heatable plate and a steam generator 31a for generating steam in the treating position 6.

Each of the household appliances 1, 1.1 ... 1.13 described in greater detail may selectively comprise one or more of the treatment detectors 8 and selectively one or more of the anomaly detectors 9, in conjunction with the signal connections thereof with the electronic control system 10, described above and not repeated herein for brevity.

Obviously, a person skilled in the art, with the object of meeting contingent and specific needs, may make further changes and variations to the household appliance 1 according to the present invention, all of which still falling within the scope of protection of the invention, which is defined by the following claims.

## Claims

1. A combination of a household appliance (1) and an external electronic device (52), said household appliance (1) comprising:
- a housing (2) with an outer wall (3) forming an outer surface (4) of the household appliance (1),
- a treating seat (5) formed in or at the housing (2) and adapted to accommodate or support household products in a treating position (6),
- at least one treatment device (7) arranged inside the housing (2) and operable for carrying out a treatment at the treating position (6) and subjecting the household product to said treatment,
- at least one treatment detector (8) at least partially arranged inside the housing (2) and configured to detect a value of a treatment parameter of the treatment carried out by the treatment device (7),
- optionally, at least one anomaly detector (9) at least partially arranged inside the housing (2) and configured to detect a quantity indicating an operating anomaly of the household appliance (1),
- an electronic control system (10) arranged in the housing (2) and in signal connection with the treatment device (7) and with the treatment detector (8) and configured to control the treatment device (7) depending on a treatment program and depending on the value detected by the treatment detector (8),
- a user interface (11) in signal connection with the electronic control system (10), said user interface (11) comprising:
- a button (12) for turning ON and OFF the household appliance (1),
- a first execution button (13), the activation of which starts a fixed treatment program which is preset with preset and invariable treatment parameters,
- a second execution button (14), the activation of which starts a versatile treatment program which is preset with treatment parameters which can be set by the user,
- a coupling button (15), the activation of which carries out a wireless communication connection of the electronic control system (10) with said external electronic device (52), which is separate from the household appliance (1), for example a smartphone or a tablet computer, for selecting and setting said settable treatment parameters of the versatile treatment program by means of the external electronic device (52).

2. A combination of a household appliance (1) and an external electronic device (52) according to claim 1, wherein the user interface (11) comprises a third execution button (16), the activation of which starts a further fixed treatment program which is preset with preset and invariable treatment parameters.

3. A combination of a household appliance (1) and an external electronic device (52) according to any one of the preceding claims, wherein:
- the external electronic device (52) comprises a computer program which is suitable for the remote control of the household appliance (1) using the wireless communication connection between the electronic control system (10) of the household appliance (1) and the external electronic device (52) which can be activated by operating the coupling button (15),
- the settable treatment parameters of the versatile treatment program may be selected and set by means of the computer program for the external electronic device (52), wherein the treatment program thus set becomes a default treatment program which can be executed whenever the second execution button (14) is operated,
wherein, optionally, by means of the computer program of the external electronic device (52), the parameters of a treatment program which can be executed by the household appliance (1) and the start thereof may be selected and set directly by means of the external electronic device (52) without involving the execution buttons (13, 14, 16) of the user interface (11),
wherein, optionally, the electronic control system (11) is configured to:
- receive, from the external electronic device (52), a signal which encodes the treatment parameters selected by the user,
- store the selected treatment parameters in an internal memory of the electronic control system (10),
- in response to the operation of the second execution button (14), execute the versatile treatment program with the stored treatment parameters,
and wherein:
- in the absence of programming of the versatile treatment program by means of the external electronic device (52), the electronic control system (10) uses preset factory treatment parameters to execute the versatile treatment program,
- if the electronic control system (10) does not find the settable treatment parameters stored in the internal memory thereof, the electronic control system (10) does not signal any error but restores the preset factory treatment parameters for the versatile treatment program.

4. A combination of a household appliance (1) and an external electronic device (52) according to any one of the preceding claims, wherein the electronic control system (10) is configured to communicate to the external electronic device (52) the versatile treatment program with the treatment parameters currently stored in the internal memory of the electronic control system (10).

5. A combination of a household appliance (1) and an external electronic device (52) according to any one of the preceding claims, wherein the user interface (11) itself does not allow any selecting and setting of the settable treatment parameters of the versatile treatment program.

6. A combination of a household appliance (1) and an external electronic device (52) according to claim 1, wherein in the absence of new programming by means of the external electronic device (52), the versatile treatment program which can be activated by means of the second execution button (14) is automatically identical to the last treatment program executed by the household appliance (1).

7. A combination of a household appliance (1) and an external electronic device (52) according to claim 1, wherein in the absence of new programing by means of the external electronic device (52), the versatile treatment program which can be activated by means of the second execution button (14) is automatically identical to the last treatment program executed by operating the second execution button (14),
and/or wherein the user interface (11) comprises less than six buttons and does not have any individual member for selecting a plurality of treatment programs or treatment parameters.

8. A combination of a household appliance (1) and an external electronic device (52) according to any one of the preceding claims, wherein the ON and OFF button (12) is a mechanical pressure button which may take a pressed position, in activated configuration, and a protruding position, in deactivated configuration, while the first (13), second (14), third (16) program execution buttons and the coupling button (15) are configured as touch keys.

9. A combination of a household appliance (1) and an external electronic device (52) according to any one of claims 1 to 7, wherein all the buttons (12,13,14,15,16) of the user interface (11) are configured as touch buttons, the outer surface of which may be pressed against the elastic resistance of a spring positioned at each of the buttons (12,13,14,15,16).

10. A combination of a household appliance (1) and an external electronic device (52) according to any one of the preceding claims, wherein the user interface (11) has no alphanumeric display but comprises a first warning light (17) having a first color and a second warning light (21) having a second color, different from the first color, wherein:
- when the household appliance (1) is OFF or in standby, both the warning lights (17, 21) are disabled,
- when the household appliance (1) is ON and awaiting activation of one of the execution buttons (13, 14, 16) or the coupling button (15), the second warning light (21) is ON,
- after the activation of one of the execution buttons (13, 14, 16) and during the execution of one of the respective fixed or versatile treatment programs, the first warning light (17) is ON.

11. A combination of a household appliance (1) and an external electronic device (52) according to claim 11, wherein the first warning light (17) and the second warning light (21) are obtained in a single optical warning area or by means of a single multicolor LED which lights up either with the first color or with the second color or remains OFF.

12. A combination of a household appliance (1) and an external electronic device (52) according to any one of the preceding claims, wherein the user interface (11) further comprises an audible warning device (22) which is configured to emit an acoustic signal:
- to confirm the operation of at least one of the execution buttons (13, 14, 16) or of the coupling button (15), and/or
- to confirm the completion of execution of the treatment program, and/or
- when one of the execution buttons (13, 14, 16) is pressed while an access door to the treating seat (5) is still open.

13. A combination of a household appliance (1) and an external electronic device (52) according to any one of the preceding claims, wherein the household appliance (1) is a washing machine (1.1), comprising a laundry drum (5') which forms the treating seat (5) positioned inside a washing tub (23) and which can be closed by a door (18), and a hydraulic system (27), a water heating system (29), and handling system (29a), wherein:
- an operation of the first execution button (13) starts a fixed wash program which is preset with preset and invariable washing parameters,
- an operation of the second execution button (14) starts a versatile wash program which is preset with washing parameters which are settable by the user.

14. A combination of a household appliance (1) and an external electronic device (52) according to claim 13, wherein the washing machine (1.1) has no dedicated detergent container so that a detergent and other additives or treatment substances are to be placed by the user directly in the laundry drum (5') together with the clothes themselves,
wherein the hydraulic system (27) comprises only one single solenoid valve (20) for the connection to the water network, as well as a duct extending from the single solenoid valve (20) directly into the washing tub (23).

## Patentansprüche

1. Kombination aus einem Haushaltsgerät (1) und einem externen elektronischen Gerät (52), wobei das Haushaltsgerät (1) aufweist:
- ein Gehäuse (2) mit einer Außenwand (3), die eine Außenfläche (4) des Haushaltsgeräts (1) bildet,
- eine Behandlungsaufnahme (5), welche in oder an dem Gehäuse (2) ausgebildet ist und geeignet ist, Haushaltsprodukte in einer Behandlungsposition (6) aufzunehmen oder zu stützen,
- mindestens eine Behandlungsvorrichtung (7), welche in dem Gehäuse (2) angeordnet ist und dazu betätigbar ist, eine Behandlung an der Behandlungsposition (6) durchzuführen und das Haushaltsprodukt der Behandlung zu unterziehen,
- mindestens einen Behandlungsdetektor (8), welcher zumindest teilweise in dem Gehäuse (2) angeordnet ist und dazu ausgebildet ist, einen Wert eines Behandlungsparameters der von der Behandlungsvorrichtung (7) durchgeführten Behandlung zu erkennen,
- optional mindestens einen Anomaliedetektor (9), welcher mindestens teilweise in dem Gehäuse (2) angeordnet ist und dazu ausgebildet ist, eine Größe zu erkennen, welche eine Betriebsanomalie des Haushaltsgeräts (1) anzeigt,
- ein elektronisches Steuersystem (10), welches in dem Gehäuse (2) angeordnet ist und in Signalverbindung mit der Behandlungsvorrichtung (7) und dem Behandlungsdetektor (8) steht und dazu ausgebildet ist, die Behandlungsvorrichtung (7) in Abhängigkeit von einem Behandlungsprogramm und in Abhängigkeit von dem Wert, welcher von dem Behandlungsdetektor (8) erkannt wurde, zu steuern,
- ein Nutzerinterface (11) in Signalverbindung mit dem elektronischen Steuersystem (10), wobei das Nutzerinterface (11) aufweist:
- einen Knopf (12) zum EIN- und AUS-Schalten des Haushaltsgeräts (1),
- einen ersten Ausführungsknopf (13), dessen Aktivierung ein festgelegtes Behandlungsprogramm startet, welches mit voreingestellten und unveränderlichen Behandlungsparametern voreingestellt ist,
- einen zweiten Ausführungsknopf (14), dessen Aktivierung ein flexibles Behandlungsprogramm startet, welches mit Behandlungsparametern voreingestellt ist, welche von dem Nutzer eingestellt werden können,
einen Kopplungsknopf (15), dessen Aktivierung eine Drahtloskommunikationsverbindung des elektronischen Steuersystems (10) mit dem genannten externen elektronischen Gerät (52), welches von dem Haushaltsgerät (1) getrennt ist, beispielsweise ein Smartphone oder ein Tablet-Computer, ausführt, um die einstellbaren Behandlungsparameter des flexiblen Behandlungsprogramms mittels des externen elektronischen Geräts (52) auszuwählen und einzustellen.

2. Kombination aus einem Haushaltsgerät (1) und einem externen elektronischen Gerät (52) nach Anspruch 1, bei welcher das Nutzerinterface (11) einen dritten Ausführungsknopf (16) aufweist, dessen Aktivierung ein weiteres festgelegtes Behandlungsprogramm startet, das mit voreingestellten und unveränderlichen Behandlungsparametern voreingestellt ist.

3. Kombination aus einem Haushaltsgerät (1) und einem externen elektronischen Gerät (52) nach einem der vorangehenden Ansprüche, bei welcher:
- das externe elektronische Gerät (52) ein Computerprogramm aufweist, das für die Fernsteuerung des Haushaltsgeräts (1) unter Verwendung der Drahtloskommunikationsverbindung zwischen dem elektronischen Steuersystem (10) des Haushaltsgeräts (1) und des externen elektronischen Geräts (52) geeignet ist, welche durch Betätigen des Kopplungsknopfs (15) aktivierbar ist,
- die einstellbaren Behandlungsparameter des flexiblen Behandlungsprogramms mittels des Computerprogramms für das externe elektronische Gerät (52) ausgewählt und eingestellt werden können, wobei das derart eingestellte Behandlungsprogramm ein Standard-Behandlungsprogramm wird, welches ausgeführt werden kann, sobald der zweite Ausführungsknopf (14) betätigt wird,
- wobei, optional, mittels des Computerprogramms des externen elektronischen Geräts (52) die Parameter eines Behandlungsprogramms, welches von dem Haushaltsgerät (1) ausgeführt werden kann, und der Start desselben ausgewählt und mittels des externen elektronischen Geräts (52) direkt eingestellt werden kann, ohne die Ausführungsknöpfe (13, 14, 16) des Nutzerinterface (11) zu verwenden,
wobei, optional, das elektronische Steuersystem (11) dazu ausgebildet ist,
- von dem externen elektronischen Gerät (52) ein Signal zu empfangen, welches die von dem Nutzer gewählten Behandlungsparameter codiert,
- die gewählten Behandlungsparameter in einem internen Speicher des elektronischen Steuersystems (10) zu speichern,
- das flexible Behandlungsprogramm mit den gespeicherten Behandlungsparametern in Reaktion auf die Betätigung des zweiten Ausführungsknopfs (14) auszuführen,
und wobei:
- das elektronische Steuersystem (10) bei fehlender Programmierung des flexiblen Behandlungsprogramms mittels des externen elektronischen Geräts (52) voreingestellte werksseitige Behandlungsparameter zur Ausführung des flexiblen Behandlungsprogramms verwendet,
- wenn das elektronische Steuersystem (10) die in dem internen Speicher desselben gespeicherten einstellbaren Behandlungsparameter nicht findet, das elektronische Steuersystem (10) keinen Fehler signalisiert, sondern die voreingestellten werksseitigen Behandlungsparameter für das flexible Behandlungsprogramm wiederherstellt.

4. Kombination aus einem Haushaltsgerät (1) und einem externen elektronischen Gerät (52) nach einem der vorangehenden Ansprüche, bei welcher das elektronische Steuersystem (10) dazu ausgebildet ist, dem externen elektronischen Gerät (52) das flexible Behandlungsprogramm mit den aktuell in dem inneren Speicher des elektronischen Steuersystems (10) gespeicherten Behandlungsparametern zu übermitteln.

5. Kombination aus einem Haushaltsgerät (1) und einem externen elektronischen Gerät (52) nach einem der vorangehenden Ansprüche, bei welcher das Nutzerinterface (11) selbst kein Auswählen und Einstellen der einstellbaren Behandlungsparameter des flexiblen Behandlungsprogramms ermöglicht.

6. Kombination aus einem Haushaltsgerät (1) und einem externen elektronischen Gerät (52) nach Anspruch 1, bei welcher, bei fehlender neuer Programmierung mittels des externen elektronischen Geräts (52), das flexible Behandlungsprogramm, welches mittels des zweiten Ausführungsknopfs (14) aktiviert werden kann, automatisch mit dem letzten von dem Haushaltsgerät (1) ausgeführten Behandlungsprogramm identisch ist.

7. Kombination aus einem Haushaltsgerät (1) und einem externen elektronischen Gerät (52) nach Anspruch 1, bei welcher, bei fehlender neuer Programmierung mittels des externen elektronischen Geräts (52), das flexible Behandlungsprogramm, welches mittels des zweiten Aktivierungsknopfs (14) aktivierbar ist, automatisch mit dem letzten Behandlungsprogramm, welches durch Betätigen des zweiten Behandlungsknopfs (14) ausgeführt wurde, identisch ist,
und/oder wobei das Nutzerinterface (11) weniger als sechs Knöpfe aufweist und keine individuellen Elemente für das Auswählen mehrere Behandlungsprogramme oder Behandlungsparameter aufweist.

8. Kombination aus einem Haushaltsgerät (1) und einem externen elektronischen Gerät (52) nach einem der vorangehenden Ansprüche, bei welcher der EIN- und AUS-Knopf (12) mechanischer Druckknopf ist, welcher in aktivierter Konfiguration eine gedrückte Position und in deaktivierter Konfiguration eine vorstehende Position einnehmen kann, während der erste (13), der zweite (14), der dritte (16) Programmausführungsknopf und der Kopplungsknopf (15) als Drucktasten ausgebildet sind.

9. Kombination aus einem Haushaltsgerät (1) und einem externen elektronischen Gerät (52) nach einem der Ansprüche 1 bis 7, bei welcher sämtliche Knöpfe (12, 13, 14, 15, 16) des Nutzerinterface (11) als Drucktasten ausgebildet sind, deren Außenfläche gegen den elastischen Widerstand einer an jedem der Tasten (12, 13, 14, 15, 16) angeordneten Feder gedrückt werden kann.

10. Kombination aus einem Haushaltsgerät (1) und einem externen elektronischen Gerät (52) nach einem der vorangehenden Ansprüche, bei welcher das Nutzerinterface (11) kein alphanumerisches Display aufweist, sondern eine erste Warnleuchte (17) mit einer ersten Farbe und eine zweite Warnleuchte (21) mit einer zweiten Farbe aufweist, welche von der ersten Farbe verschieden ist, wobei
- wenn das Haushaltsgerät (1) AUS ist oder sich im Standby befindet, beide Warnleuchten (17, 21) deaktiviert sind,
- wenn das Haushaltsgerät (1) EIN ist und auf die Aktivierung eines der Ausführungsknöpfe (13, 14, 16) oder des Kopplungsknopfs (15) wartet, die zweite Warnleuchte (21) EIN ist,
- nach dem Aktivieren eines der Ausführungsknöpfe (13, 14, 16) und während der Ausführung eines der jeweiligen festgelegten oder flexiblen Behandlungsprogramme die erste Warnleuchte (17) EIN ist.

11. Kombination aus einem Haushaltsgerät (1) und einem externen elektronischen Gerät (52) nach Anspruch 11, bei welcher die erste Warnleuchte (17) und die zweite Warnleuchte (21) als ein einzelner optischer Warnbereich oder mittels einer einzelnen mehrfarbigen LED ausgebildet sind, welche entweder in der ersten Farbe oder in der zweiten Farbe aufleuchtet oder AUS bleibt.

12. Kombination aus einem Haushaltsgerät (1) und einem externen elektronischen Gerät (52) nach einem der vorangehenden Ansprüche, bei welcher das Nutzerinterface (11) ferner eine hörbare Warnvorrichtung (22) aufweist, welche dazu ausgebildet ist, ein akustisches Signal auszugeben,
- um die Betätigung mindestens eines der Ausführungsknöpfe (13, 14, 16) oder des Kopplungsknopfs (15) zu bestätigen, und/oder
- um den Abschluss der Ausführung des Behandlungsprogramms zu bestätigen, und/oder
- wenn einer der Betätigungsknöpfe (13, 14, 16) gedrückt wird, während eine Zugangstür zu der Behandlungsaufnahme (5) noch offen ist.

13. Kombination aus einem Haushaltsgerät (1) und einem externen elektronischen Gerät (52) nach einem der vorangehenden Ansprüche, bei welcher das Haushaltsgerät (1) eine Waschmaschine (1.1) mit einer Wäschetrommel (5'), welche die Behandlungsaufnahme (5) bildet, welche in einem Waschraum(23) angeordnet ist und welche mittels einer Tür (18) geschlossen werden kann, und einem Hydrauliksystem (27), einem Wasserheizsystem (29), und einem Handhabungssystem (29a) ist, wobei:
- eine Betätigung des ersten Ausführungsknopfs (13) ein festgelegtes Waschprogramm startet, welches mit voreingestellten und unveränderlichen Waschparametern voreingestellt ist,
- eine Betätigung des zweiten Ausführungsknopfs (14) ein flexibles Waschprogramm startet, welches mit durch den Nutzer wählbaren Waschparametern voreingestellt ist.

14. Kombination aus einem Haushaltsgerät (1) und einem externen elektronischen Gerät (52) nach Anspruch 13, bei welcher die Waschmaschine (1.1) keinen speziellen Waschmittelbehälter aufweist, so dass ein Waschmittel und andere Additive oder Behandlungssubstanzen von dem Nutzer mit der Kleidung selbst direkt in die Wäschetrommel (5') gegeben werden muss,
wobei das Hydrauliksystem (27) nur ein einzelnes Elektromagnetventil (20) für die Verbindung mit dem Wassernetz sowie eine Leitung aufweist, die sich von dem einzelnen Elektromagnetventil (20) direkt in den Waschraum (23) erstreckt.

## Revendications

1. Combinaison d'un appareil électroménager (1) et d'un dispositif électronique externe (52), l'appareil électroménager (1) comprenant :
- un boîtier (2) avec une paroi extérieure (3) formant une surface extérieure (4) de l'appareil électroménager (1),
- un support de traitement (5) formé dans ou au boîtier (2) et adapté pour loger ou porter des produits ménagers dans une position de traitement (6),
- au moins un dispositif de traitement (7) agencé à l'intérieur du boîtier (2) et fonctionnant pour effectuer un traitement à la position de traitement (6) et exposer le produit ménager audit traitement,
- au moins un détecteur de traitement (8) agencé au moins partiellement à l'intérieur du boîtier (2) et configuré pour détecter une valeur d'un paramètre de traitement du traitement effectué par le dispositif de traitement (7),
- optionnellement, au moins un détecteur d'anomalie (9) au moins partiellement agencé à l'intérieur du boîtier (2) et configuré pour détecter une quantité indiquant une anomalie de fonctionnement de l'appareil électroménager (1),
- un système de commande électronique (10) agencé dans le boîtier (2) et en liaison par signal avec le dispositif de traitement (7) et avec le détecteur de traitement (8) et configuré pour commander le dispositif de traitement (7) en fonction d'un programme de traitement et en fonction de la valeur détectée par le détecteur de traitement (8),
- une interface utilisateur (11) en liaison par signal avec le système de commande électronique (10), ladite interface utilisateur (11) comprenant :
- un bouton (12) pour mettre l'appareil électroménager (1) en ON et OFF,
- un premier bouton d'exécution (13) dont l'activation fait débuter un programme de traitement fixe qui est préréglé avec des paramètres de traitement préréglés et invariables,
- un deuxième bouton d'exécution (14) dont l'activation fait débuter un programme polyvalent de traitement qui est préréglé avec des paramètres qui peuvent être réglés par l'utilisateur,
- un bouton de raccordement (15) dont l'activation met en œuvre une liaison de communication sans fil du système de commande électronique (10) avec ledit dispositif électronique externe (52) qui est séparé de l'appareil électroménager (1), par exemple un téléphone portable ou un ordinateur portable, pour choisir et régler lesdits paramètres de traitement, qui peuvent être réglés, du programme polyvalent de traitement moyennant le dispositif électronique externe (52).

2. Combinaison d'un appareil électroménager (1) et d'un dispositif électronique externe (52) selon la revendication 1, dans laquelle l'interface utilisateur (11) comprend un troisième bouton d'exécution (16) dont l'activation fait démarrer un autre programme de traitement fixe qui est préréglé avec des paramètres de traitement préréglés et invariables.

3. Combinaison d'un appareil électroménager (1) et d'un dispositif électronique externe (52) selon l'une des revendications précédentes, dans laquelle :
- le dispositif électronique externe (52) comprend un programme d'ordinateur qui est adapté pour la commande à distance de l'appareil électroménager (1) utilisant la liaison de communication sans fil entre le système de commande électronique (10) de l'appareil électroménager (1) et le dispositif électronique externe (52) qui peut être activé en actionnant le bouton de raccordement (15),
- les paramètres de traitement pouvant être réglés du programme de traitement divers peuvent être choisis et réglés moyennant le programme d'ordinateur pour le dispositif électronique externe (52), dans laquelle le programme de traitement ainsi réglé devient un programme de traitement par défaut qui peut être exécuté chaque fois que le deuxième bouton d'exécution (14) est actionné,
dans laquelle, optionnellement, moyennant le programme d'ordinateur du dispositif électronique externe (52), les paramètres d'un programme de traitement qui peut être exécuté par l'appareil électroménager (1) et le démarrage de celui-ci peuvent être choisis et réglés directement moyennant le dispositif électronique externe (52) sans faire participer les boutons d'exécution (13, 14, 16) de l'interface utilisateur (11), dans laquelle, optionnellement, le système de commande électronique (11) est configuré pour :
- recevoir du dispositif électronique externe (52) un signal qui encode les paramètres de traitement choisis par l'utilisateur,
- enregistrer les paramètres de traitement choisis dans une mémoire interne du système de commande électronique (10),
- en réponse à l'opération du deuxième bouton d'exécution (14), mettre en œuvre le programme polyvalent de traitement avec les paramètres de traitement stockés,
et dans laquelle :
- en absence de programmation du programme de traitement divers moyennant le dispositif électronique externe (52), le système de commande électronique (10) utilise des paramètres de traitement d'usine préréglés pour exécuter le programme polyvalent de traitement,
- si le système de commande électronique (10) ne trouve pas les paramètres de traitement réglables stockés dans la mémoire interne de celui-ci, le système de commande électronique (10) n'indique aucune erreur mais restaure les paramètres de traitement d'usine préréglés pour le programme polyvalent de traitement.

4. Combinaison d'un appareil électroménager (1) et d'un dispositif électronique externe (52) selon l'une des revendications précédentes, dans laquelle le système de commande électronique (10) est configuré pour communiquer au dispositif électronique externe (52) le programme polyvalent de traitement avec les paramètres de traitement actuellement stockés dans la mémoire interne du système de commande électronique (10).

5. Combinaison d'un appareil électroménager (1) et d'un dispositif électronique externe (52) selon l'une des revendications précédentes, dans laquelle l'interface utilisateur (11) elle-même ne permet aucune sélection ni réglage des paramètres de traitement réglables du programme polyvalent de traitement.

6. Combinaison d'un appareil électroménager (1) et d'un dispositif électronique externe (52) selon la revendication 1, dans laquelle, en absence d'une nouvelle programmation moyennant le dispositif électronique externe (52), le programme polyvalent de traitement qui peut être actionné moyennant le deuxième bouton d'exécution (14), est automatiquement identique au dernier programme de traitement exécuté par l'appareil électroménager (1).

7. Combinaison d'un appareil électroménager (1) et d'un dispositif électronique externe (52) selon la revendication 1, dans laquelle, en absence d'une nouvelle programmation moyennant le dispositif électronique externe (52), le programme polyvalent de traitement qui peut être actionné moyennant le deuxième bouton d'exécution (14), est automatiquement identique au dernier programme de traitement exécuté par le deuxième bouton d'exécution (14),
et/ou dans laquelle l'interface utilisateur (11) comprend moins que six boutons et n'a aucun élément individuel pour choisir une pluralité de programmes de traitement ou paramètres de traitement.

8. Combinaison d'un appareil électroménager (1) et d'un dispositif électronique externe (52) selon l'une des revendications précédentes, dans laquelle le bouton ON et OFF (12) est un bouton mécanique à pression qui peut prendre une position enfoncée dans la configuration activée et un bouton en saillie dans la configuration désactivée, alors que les premier (13), deuxième (14) et troisième (16) boutons d'exécution de programme et le bouton de connexion (15) sont configurés comme boutons tactiles.

9. Combinaison d'un appareil électroménager (1) et d'un dispositif électronique externe (52) selon l'une des revendications 1 à 7, dans laquelle les boutons (12, 13, 14, 15, 16) de l'interface utilisateur (11) sont configurés comme boutons tactiles dont la surface extérieure peut être pressée contre la résistance élastique d'un ressort positionné à chacun des boutons (12, 13, 14, 15, 16).

10. Combinaison d'un appareil électroménager (1) et d'un dispositif électronique externe (52) selon l'une des revendications précédentes, dans laquelle l'interface utilisateur (11) n'a pas d'affichage alphanumérique mais comprend un premier témoin lumineux (17) ayant une première couleur et un deuxième témoin lumineux (21) ayant une deuxième couleur différente de la première couleur, dans laquelle :
- lorsque l'appareil électroménager (1) est en OFF ou en attente, les deux témoins lumineux (17, 21) sont éteints,
- lorsque l'appareil électroménager (1) est en ON et en attente de l'activation de l'un des boutons d'exécution (13, 14, 16) ou du bouton de connexion (15), le deuxième témoin lumineux (21) est ON,
- après l'activation de l'un des boutons d'exécution (13, 14, 16) et pendant le déroulement de l'un des programmes polyvalents de traitement fixes, le premier témoins lumineux (17) est ON.

11. Combinaison d'un appareil électroménager (1) et d'un dispositif électronique externe (52) selon la revendication **11,** dans laquelle le premier témoin lumineux (17) et le deuxième témoin lumineux (21) sont obtenus dans une seule zone optique d'avertissement ou moyennant d'une seule LED polychrome qui s'allume soit avec la première couleur, soit avec la deuxième couleur ou reste OFF.

12. Combinaison d'un appareil électroménager (1) et d'un dispositif électronique externe (52) selon l'une des revendications précédentes, dans laquelle l'interface utilisateur (11) comprend en outre un dispositif d'avertissement audible (22) qui est configuré pour émettre un signal acoustique :
- pour confirmer l'opération d'au moins un des boutons d'exécution (13, 14, 16) ou du bouton de raccordement (15) et/ou
- pour confirmer la fin d'exécution d'un programme de traitement et/ou
- lorsque l'un des boutons d'exécution (13, 14, 16) est pressé alors qu'une porte d'accès au support de traitement (5) est encore ouverte.

13. Combinaison d'un appareil électroménager (1) et d'un dispositif électronique externe (52) selon l'une des revendications précédentes, dans laquelle l'appareil électroménager (1) est un lave-linge (1.1) comprenant un tambour de linge (5') qui forme le support de traitement (5) positionné à l'intérieur d'une cuve à lessive (23) et qui peut être fermé par une porte (18), et un système hydraulique (27), un système de chauffage d'eau (29) et un système de manipulation (29a),
dans laquelle
- une opération du premier bouton d'exécution (13) démarre un programme de lavage fixe qui est préréglé avec des paramètres de lavage invariables,
- une opération du deuxième bouton d'exécution (14) démarre un programme polyvalent de lavage qui est préréglé avec des paramètres de lavage qui sont préréglés par l'utilisateur.

14. Combinaison d'un appareil électroménager (1) et d'un dispositif électronique externe (52) selon la revendication 13, dans laquelle le lave-linge (1.1) n'a pas de contenant spécifique pour détergeant, si bien qu'un détergeant et d'autres additifs ou substances de traitement soient à placer par l'utilisateur directement dans le tambour de linge (5') ensemble avec les vêtements eux-mêmes,
dans laquelle le système hydraulique (27) comprend une seule électrovanne (20) pour la connexion au réseau d'eau, ainsi qu'un conduit s'étendant de l'unique électrovanne (20) directement à la cuve de lessive (23).
